Europäisches Patentamt

European Patent Office

Office européen des brevets

(11) Veröffentlichungsnummer: **0 518 011 A1**

# (12) EUROPÄISCHE PATENTANMELDUNG

(21) Anmeldenummer: **92105435.9**

(22) Anmeldetag: **30.03.92**

(51) Int. Cl.5: **A47B 47/03**, F16B 12/02, F16B 12/34

(30) Priorität: **11.06.91 DE 9107182 U**

(43) Veröffentlichungstag der Anmeldung:
**16.12.92 Patentblatt 92/51**

(84) Benannte Vertragsstaaten:
**AT BE CH DE DK ES FR GB IT LI LU NL SE**

(71) Anmelder: **META-LAGERTECHNIK GmbH & Co. KG**
**Industriegebiet Grosse Wiese**
**W-5760 Arnsberg 12(DE)**

(72) Erfinder: **Hasenclever, Bernd**
**Am Wehr 11**
**W-5760 Arnsberg 18(DE)**
Erfinder: **Angenendt, Hubert**
**Recklinghauserstrasse 240**
**W-5768 Sundern(DE)**

(74) Vertreter: **Vogel, Georg**
**Hermann-Essig-Strasse 35 Postfach 105**
**W-7141 Schwieberdingen(DE)**

(54) **Regal.**

(57) Die Erfindung betrifft ein Regal mit vertikal sich erstreckenden Profilstücken sowie mindestens einem Gitter, das mit den Profilstücken lösbar verbindbar ist. Die Profilstücke weisen Ausnehmungen bzw. Vorsprünge auf, in die Gittertragkörper einhängbar sind.

FIG.1

EP 0 518 011 A1

Die Erfindung betrifft ein Regal mit vertikal sich erstreckenden Profilstücken sowie mindestens einem Gitter, das mit den Profilstücken lösbar verbindbar ist.

Bei herkömmlichen Regalen der eingangs genannten Art sind die Gitter mit dem Regal in der Regel verschraubt, wodurch zwar gute Verbindungen zwischen den Teilen herstellbar sind. Die Herstellung ist jedoch zeitaufwendig und zudem setzt sie weiteres Werkzeug voraus.

Ausgehend von dem obigen Stand der Technik liegt der Erfindung die Aufgabe zugrunde, das gattungsgemäße Regal ohne unangemessenen konstruktiven Aufwand so weiterzubilden, daß die Verbindung der Gitter mit dem Regal deutlich einfacher und schneller herstellbar ist. Eine weitere Aufgabe der Erfindung ist es, die Verbindung so zu gestalten, daß sie auch andere Funktionen erfüllen kann.

Die gestellte Aufgabe wird beim gattungsgemäßen Regal erfindungsgemäß dadurch gelöst, daß die Profilstücke Ausnehmungen bzw. Vorsprünge aufweisen, in die die Gittertragkörper einhängbar sind.

Man erkennt, daß die Erfindung jedenfalls dann verwirklicht ist, wenn die Verbindung zwischen dem Regal und dem Gitter mittels Körper herstellbar ist, die in die Profilstücke einhängbar sind und auf denen sich die Gitter abstützen können.

Weitere zweckmäßige und vorteilhafte Ausgestaltungen der Erfindung gehen aus den Unteransprüchen hervor.

Eine besonders zweckmäßige Ausgestaltung sieht bei einem Regal mit als Hohlprofilstücke ausgebildeten Profilstücken vor, daß die Ausnehmungen jeweils einen Einlaß- und einen Halteabschnitt mit geringerer Breite für den Gittertragkörper aufweisen und daß der Gittertragkörper einen Trag- und mindestens einen Einhängeabschnitt mit einer Ausnut aufweist, die mit dem Halteabschnitt form- und kraftschlüssig verbindbar ist. Hierbei ist es besonders zweckmäßig, wenn die Ausnehmungen die Form eines Schlüssellochs besitzen. Solche Ausnehmungen sind zum einen einfach herstellbar und zum anderen besonders gut dazu geeignet, die gewünschten Verbindungen herstellen zu können. Der Gittertragkörper kann unterschiedliche Formen aufweisen. Es ist jedoch besonders zweckmäßig, wenn er die Form einer geraden oder gekröpften Stange aufweist.

Handelt es sich um ein Regal mit Gittern, die einen aus Profilstücken bestehenden Rahmen aufweisen, dann ist es zweckmäßig, wenn der Tragabschnitt des Gittertragkörpers eine Ausnehmung aufweist, die mit einem Teil des Rahmens formschlüssig verbindbar ist. Die unteren Gittertragkörper dienen als Stütze des Gitters, während die oberen Gittertragkörper gewährleisten, daß das Gitter mit dem Regal unverrückbar verbunden werden kann.

Ferner sieht eine zweckmäßige Ausgestaltung der Erfindung bei einem Regal mit einer Vielzahl von in den Profilstücken ausgebildeten Ausnehmungen, das mit mindestens einem anderen Regal lösbar verbindbar ist, vor, daß der Abstand zwischen den benachbarten Regalen etwa der Länge der Gittertragkörper entspricht und daß das eine Regal mit dem einen Einhängeabschnitt des jeweiligen Gittertragkörpers verbindbar ist, während das andere Regal mit dem jeweils anderen Einhängeabschnitt verbindbar ist.

Ein Ausführungsbeispiel der Erfindung ist in der Zeichnung schematisch dargestellt und wird im folgenden näher erläutert. Es zeigen

Fig. 1    ein Regalsystem in perspektivischer Seitenansicht,

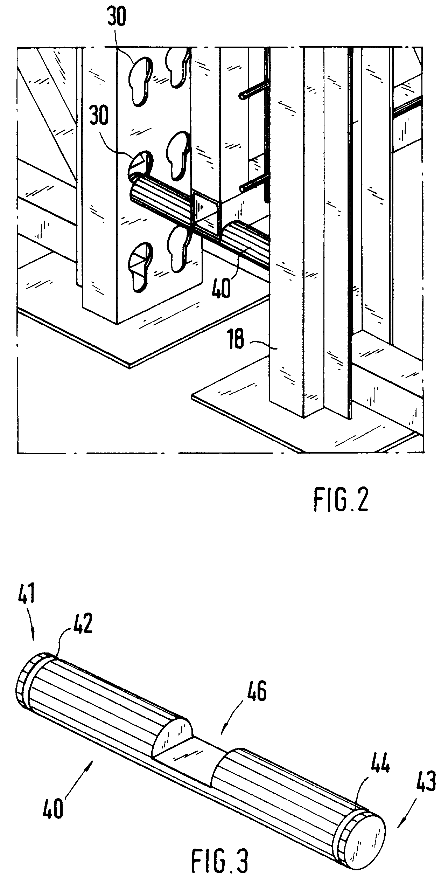

Fig. 2    den mit A bezeichneten Teil des Regalsystems nach Figur 1 vergrößert dargestellt,

Fig. 3    einen Gittertragkörper in perspektivischer Seitenansicht,

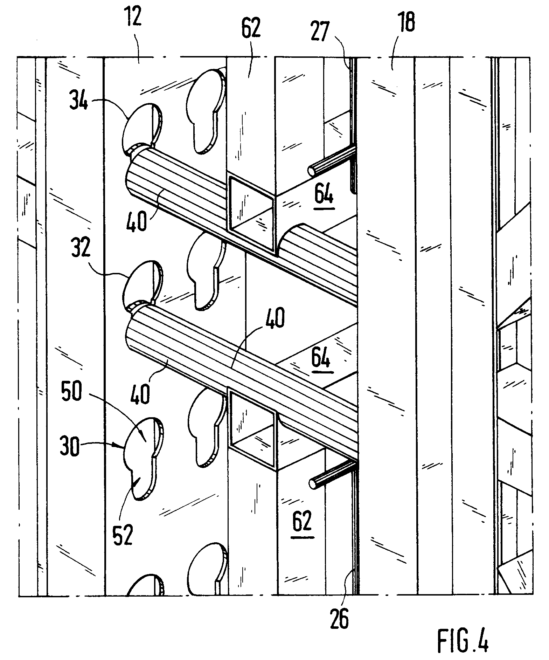

Fig. 4    den mit B bezeichneten Teil des Regalsystems nach Fig. 1 vergrößert dargestellt und

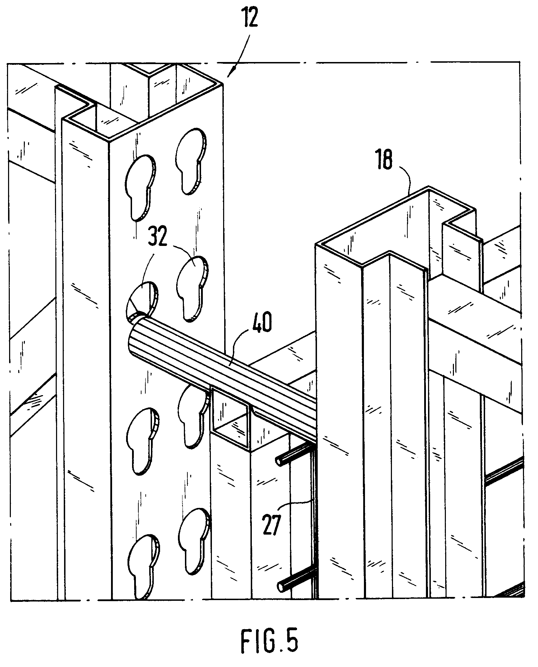

Fig. 5    den mit C bezeichneten Teil des Regalsystems nach Fig. 1 vergrößert dargestellt.

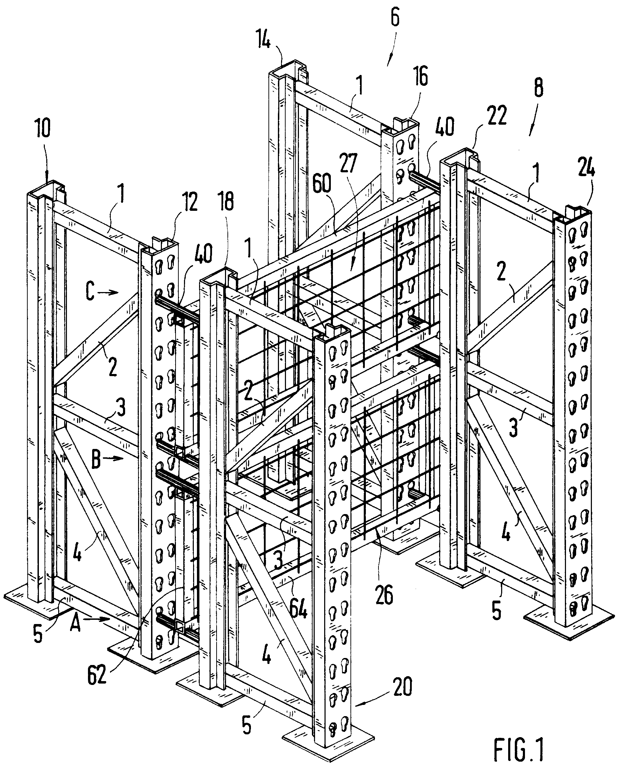

In Fig. 1 sind zwei Regale 6 und 8 dargestellt, die ein Teil eines Regalsystems bilden. Die jeweiligen Regale 6 und 8 weisen vertikal sich erstreckende Profilstücke 10 bis 24 auf, die miteinander durch Querstücke 1, 2, 3, 4 und 5 verbindbar sind. Zwischen den Regalen 6 und 8 befinden sich zwei Gitter 26 und 27, die mit den Profilstücken 12, 16 und 18, 22 lösbar verbindbar sind. Die Profilstücke 10 bis 24 besitzen Ausnehmungen 30, 32 und 34, in die Gittertragkörper 40 einhängbar sind. Dabei besitzen die Ausnehmungen 30, 32, 34 jeweils einen Einlaßabschnitt 50 und einen Halteabschnitt 52 mit geringerer Breite für den jeweiligen Gittertragkörper 40. Der Gittertragkörper 40 weist einen Tragabschnitt 46 und zwei Einhängeabschnitte 41 und 43 mit jeweils einer Außennut 42 und 43 auf, die mit dem jeweiligen Halteabschnitt 52 form und kraftschlüssig verbindbar ist. Man erkennt, daß die Ausnehmungen 30, 32 und 34 die Form eines Schlüssellochs besitzen. Der Gittertragkörper 40, der allgemein verschiedene Formen aufweisen könnte, besitzt im vorliegenden Ausführungsbeispiel die Form einer Stange mit etwa kreisrundem Querschnitt.

Die Gitter 26 und 27 sind von aus Profilstücken 60, 62 und 64 bestehenden Rahmen getragen. Der Tragabschnitt 46 des Gittertragkörpers 40 besitzt eine Ausnehmung bzw. einen Einschnitt, die bzw. der mit einem Teil des Rahmens formschlüssig verbindbar ist. Die endseitig ausgebildeten Außennuten 42 und 44 sind so bemessen, daß die Einhängeabschnitte 41 und 43 in die zugeordneten Halteabschnitte passend einbringbar sind.

Ferner läßt insbesondere Fig. 1 erkennen, daß die Profilstücke 10 bis 24 eine Vielzahl von Ausnehmungen 30, 32 und 34 besitzen und daß die Regale 6 und 8 durch die Gittertragkörper 40 verbunden sind. Dabei ist der Abstand der Regale 6 und 8 durch die Gittertragkörper 40 definiert, die über ihr eines Ende mit dem Regal 6 und über ihr anderes Ende mit dem Regal 8 verbunden sind. Die Gitter 26 und 27 sind von jeweils vier Gittertragkörpern 40 getragen und mit diesen fest verbunden.

Die durch die Erfindung erzielten Vorteile bestehen insbesondere in einer sehr einfachen Blindmontage an der Profilaußenseite, für die als Werkzeug nur ein Hammer benötigt wird. Die Befestigungselemente sind als Automatendreh- bzw. Frästeile preisgünstig herstellbar. Beim Einsatz in Doppelregalen wird durch die Gittertragkörper gleichzeitig eine gleichmäßige Distanz der Regale sichergestellt.

Beim Zusammenbau solcher Regale kann wie folgt vorgegangen werden. Die Gittertragkörper (Gitterhalter) werden zunächst bis zur Nut an das große Rundloch (Einlaßöffnung) der Schlüssellochung eingeführt. Danach wird das Teil um die eigene Achse gedreht, bis die Aussparung zur Aufnahme des Gitters in der gewünschten Position steht. Nun wird der Halter mit einem Hammer nach unten geschlagen, bis die Endposition im unteren Bereich des Halteabschnittes erreicht ist. Durch die maßliche Überdeckung zwischen Nutdurchmesser des Gittertragkörpers und der Schlüssellochbreite wird eine Preßspannung erreicht, die das Bauteil sicher fixiert. Die Halteelemente sind an beiden Seiten mit einer Nut versehen. Dadurch können sie zusätzlich als Distanzhalter für Doppelregale eingesetzt werden. Je nach Ausführung des Gitters muß eine entsprechende Aussparung an den Haltern vorgesehen sein.

**Patentansprüche**

1. Regal mit vertikal sich erstreckenden Profilstücken sowie mindestens einem Gitter, das mit den Profilstücken lösbar verbindbar ist, dadurch gekennzeichnet, daß die Profilstücke (10 - 24) Ausnehmungen (30, 32, 34) bzw. Vorsprünge aufweisen, in die Gittertragkörper (40) einhängbar sind.

2. Regal nach Anspruch 1 mit als Hohlprofilstücke ausgebildeten Profilstücken, dadurch gekennzeichnet, daß die Ausnehmungen (30, 32, 34) jeweils einen Einlaßabschnitt (50) und einen Halteabschnitt (52) mit geringerer Breite für den Gittertragkörper (40) aufweisen und daß der Gittertragkörper (40) einen Tragabschnitt (46) und mindestens einen Einhängeabschnitt (41, 43) mit einer Außennut (42, 43) aufweist, die mit dem Halteabschnitt (52) form- und kraftschlüssig verbindbar ist.

3. Regal nach Anspruch 1 oder 2, dadurch gekennzeichnet, daß die Ausnehmung (30, 32, 34) die Form eines Schlüssellochs besitzt.

4. Regal nach einem der Ansprüche 1 bis 3, dadurch gekennzeichnet, daß der Gittertragkörper (40) die Form einer geraden oder gekröpften Stange aufweist.

5. Regal nach einem der Ansprüche 1 bis 4 mit Gittern, die einen aus Profilstücken bestehenden Rahmen aufweisen, dadurch gekennzeichnet, daß der Tragabschnitt (46) des Gittertragkörpers (40) eine Ausnehmung aufweist, die mit einem Teil des Rahmens formschlüssig verbindbar ist.

6. Regal nach einem der Ansprüche 1 bis 5, dadurch gekennzeichnet, daß der Gittertragkörper (40) einen im wesentlichen kreisrunden Querschnitt sowie zwei endseitig ausgebildete Außennuten (42, 44) aufweist.

7. Regal nach einem der Ansprüche 1 bis 6 mit einer Vielzahl von in den Profilstücken ausgebildeten Ausnehmungen, das mit mindestens einem anderen Regal lösbar verbindbar ist, dadurch gekennzeichnet, daß der Abstand zwischen den benachbarten Regalen (6, 8) etwa der Länge des Gittertragkörpers (40) entspricht und daß das eine Regal (6) mit dem einen Einhängeabschnitt (41) des Gittertragkörpers (40) verbindbar ist, während das andere Regal (8) mit dem anderen Einhängeabschnitt (42) verbindbar ist.

8. Regal nach einem der Ansprüche 1 bis 7 mit etwa rechteckförmigen Gittern, dadurch gekennzeichnet, daß jedes Gitter (26) mit jeweils mindestens vier Gittertragkörpern (40) verbindbar ist.

FIG.1

FIG.2

FIG.3

FIG.4

FIG.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-1 106 545 (SCHAFER) | 1 | A47B47/03 |
| Y | * Seite 1, Zeile 9 - Zeile 22; Abbildungen 1,5 * | 2-4,6 | F16B12/02 |
| | * Seite 3, Zeile 87 - Zeile 94 * | | F16B12/34 |
| | --- | | |
| Y | US-A-3 787 134 (BURR) | 2-4,6 | |
| A | * Zusammenfassung; Abbildungen 4,5 * | 7 | |
| | * Spalte 1, letzter Absatz - Spalte 2, Absatz 2 * | | |
| | --- | | |
| A | NL-A-8 601 970 (METAALWARENFABRIEK VAN GEEL B.V.) | 5 | |
| | * Abbildung 1 * | | |
| | --- | | |
| A | FR-A-2 287 873 (SAIR-TECMA) | 7 | |
| | * Abbildung 1 * | | |
| | --- | | |
| A | FR-A-2 229 281 (FIRMA VOKO-BUROMOBELFABRIKEN FRANZ VOGT & CO.) | | |
| | ----- | | |

**RECHERCHIERTE SACHGEBIETE (Int. Cl.5)**

A47B
F16B

Der vorliegende Recherchenbericht wurde für alle Patentansprüche erstellt

| Recherchenort | Abschlußdatum der Recherche | Prüfer |
|---|---|---|
| DEN HAAG | 26 AUGUST 1992 | JONES C.T. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................
& : Mitglied der gleichen Patentfamilie, übereinstimmendes Dokument